# EUROPÄISCHE PATENTSCHRIFT

(11) **EP 3 190 306 B1**
(45) Veröffentlichungstag und Bekanntmachung des Hinweises auf die Patenterteilung: **24.04.2019**
(21) Anmeldenummer: 16150797.5
(22) Anmeldetag: 11.01.2016
(51) Int. Cl.: F16F 1/38, B21D 22/00, B21D 53/10

(54) **VERFAHREN UND VORRICHTUNG ZUR HERSTELLUNG EINER LAGERBUCHSE**
DEVICE AND METHOD FOR MANUFACTURING A BUSHING
APPAREIL ET PROCEDE DE PRODUCTION D'UN COUSSINET

(43) Veröffentlichungstag der Anmeldung: 12.07.2017
(73) Patentinhaber: Stabitec Stanz-Biegetechnik GmbH, 42489 Wülfrath (DE)
(72) Erfinder: Seilheimer-Wittmann, Joachim, 58093 Hagen (DE)
(74) Vertreter: Nunnenkamp, Jörg

(56) Entgegenhaltungen:
- US-A- 1 924 230
- US-A- 2 889 866

## Beschreibung

Die Erfindung betrifft ein Verfahren zur Herstellung einer Lagerbuchse im Zuge der Realisierung eines Gummilagers.

Lagerbuchsen für Gummilager werden beispielsweise aus einem Metallstreifen durch Biegen hergestellt. Auch der Rückgriff auf eine Rohrschale ist denkbar. Die auf diese Weise hergestellte Lagerbuchse kann als Vulkanisationsträger für einen von der Lagerbuchse umschlossenen und hierin definierten Gummikörper fungieren.

Die auf diese Weise hergestellten Gummilager werden vielfach in der Technik verbaut, beispielsweise in Automobilen. Ein typisches Anwendungsgebiet solcher Gummilager sieht so aus, dass mit dessen Hilfe einzelne Lenker einer Achslagerung an einer Karosserie befestigt werden. Selbstverständlich sind auch andere Einsatzgebiete als Lenkerlager denkbar und werden von der Erfindung umfasst.

Im Stand der Technik nach der EP 1 722 124 B1 der Anmelderin bzw. den dort genannten Referenzen wird bei der Herstellung der Lagerbuchse so vorgegangen, dass die Lagerbuchse im Bereich einer Längstrennlinie mit an jeweils benachbarten Längskanten vorgesehenen Kantenprofilen ausgerüstet ist. Einzelne Zinken bzw. Zinkenausnehmungen der Kantenprofile greifen ineinander. Im Zuge der Herstellung erfolgt eine plastische Verformung um ein vorgegebenes Maß. Das hat sich grundsätzlich bewährt, ist allerdings fertigungstechnisch relativ aufwendig.

Die US 2 889 866 A stellt den nächstliegenden Stand der Technik dar und beschreibt ebenfalls ein Verfahren zur Herstellung einer Lagerbuchse. Dabei wird auch ein Materialstreifen abgelenkt und an seinen Enden zu einer Buchse vorgebogen. Die vorgebogene Buchse wird anschließend mit Hilfe eines an einer Biegeseite anliegenden Kernstückes in einer Weiterbiegekontur eines Niederhalters um das Kernstück herum weitegebogen. Schließlich erfolgt ein Endbiegen unter Einstellung eines Längsschlitzes vorgegebener Größe. Das Weiterbiegen in der Weiterbiegekontur lässt in diesem Zusammenhang keinerlei Spiel zu.

Der zusätzlich noch zu berücksichtigende Stand der Technik nach der US 1 924 230 A1 befasst sich ebenfalls mit der Herstellung einer Lagerbuchse, bei welcher ein Materialstreifen abgelenkt, zunächst vorgebogen, dann weitergebogen und schlussendlich endgebogen wird.

Der Erfindung liegt das technische Problem zugrunde, ein derartiges Verfahren zur Herstellung einer Lagerbuchse im Zuge der Realisierung eines Gummilagers anzugeben, welches mit geringem Aufwand arbeitet und eine preisgünstige Realisierung ermöglicht.

Zur Lösung dieser technischen Problemstellung ist Gegenstand der Erfindung ein Verfahren nach Anspruch 1 sowie eine Vorrichtung gemäß Anspruch 9.

Die endgebogene Buchse kann nach der Herstellung ausgeworfen werden und steht dann als Lagerbuchse zur Verfügung. In einem nachfolgenden Schritt mag die Lagerbuchse als Vulkanisationsträger fungieren. D.h., auf die Innenseite bzw. Innenfläche der Lagerbuchse wird ein Gummikörper aufvulkanisiert. Dazu mag die streifenförmige Lagerbuchse auf ihrer dem Gummikörper zugewandten Seite mit einer Beschichtung ausgerüstet werden. Hierbei kann es sich um eine Grundierung, einen Klebstoff oder dergleichen handeln, welcher die Haftung des anschließend auf- bzw. eingespritzten Elastomers zur Darstellung des Gummikörpers im Innern der Lagerbuchse begünstigt. Das ist selbstverständlich nur beispielhaft und nicht zwingend zu verstehen.

Für die Herstellung der Lagerbuchse wird zunächst einmal ein Materialstreifen und insbesondere ein Endlosmaterialstreifen eingesetzt. Hierbei handelt es sich im Regelfall um einen Metallstreifen und insbesondere Stahlstreifen. Grundsätzlich kann aber auch ein Kunststoffstreifen zum Einsatz kommen.

Ja selbst Kombinationen Kunststoff/Metall sind denkbar. Jedenfalls wird dieser (Endlos-)Materialstreifen abgelängt, wobei die auf diese Weise zur Verfügung gestellte Länge dem Umfang der daraus hergestellten Lagerbuchse entspricht. Das Ablängen kann in das erfindungsgemäße Verfahren integriert werden oder auch vorgeschaltet sein. Dann stehen jeweils Buchsenstreifen der gewünschten Länge zur Verfügung, die nachfolgend gebogen werden.

Im Regelfall und um die Kosten zu minimieren sowie die Herstellung zu beschleunigen, wird der (Endlos-)Materialstreifen jedoch zugleich abgelängt und an seinen Enden zu der Buchse vorgebogen. D.h., die Definition der Länge des Buchsenstreifens und das Vorbiegen der Enden erfolgen in einem Zug.

Nachdem die Enden der Buchse vorgebogen worden sind, wird die solchermaßen vorgebogene Buchse weitergebogen. Das erfolgt mit Hilfe des Kernstückes, welches dazu an einer Biegeseite der vorgebogenen Buchse anliegt. Die Biegeseite bezeichnet in diesem Zusammenhang die Oberflächenseite der vorgebogenen Buchse, welche bereits die Vorbiegungen aufweist. An dieser Biegeseite liegt das Kernstück an.

Um nun die vorgebogene Buchse weiter zu biegen, wird die betreffende und vorgebogene Buchse mit Hilfe des an der Biegeseite anliegenden Kernstückes in der Weiterbiegekontur des Niederhalters um das Kernstück herum weitergebogen. Dazu fährt im Regelfall das Kernstück in die Weiterbiegekontur des Niederhalters ein, so dass durch diesen Vorgang die vorgebogene Buchse weitergebogen wird.

Die weitergebogene Buchse wird nun zusammen mit dem Kernstück in der Biegematrize endgebogen. Zu diesem Zweck wird im Allgemeinen die weitergebogene Buchse in Verbindung mit dem Kernstück auf die demgegenüber ortsfeste Biegematrize zubewegt. Zu diesem Zweck befindet sich die weitergebogene Buchse zusammen mit dem Kernstück in der Weiterbiegekontur des Niederhalters. Der Niederhalter wird mit der weitergebogenen Buchse und dem im Innern aufgenommenen Kernstück auf die ortsfeste Biegemaschine zubewegt.

Zugleich mit dem beschriebenen Vorgang des Endbiegens wird zwischen den Enden der Buchse der Längsschlitz vorgegebener Größe eingestellt. Auf diese Weise wird letztlich eine Schlitzbuchse mit definiertem Längsschlitz realisiert, welche den Vorgaben beim anschließenden Einbau als Gummilager Rechnung trägt.

Nach vorteilhafter Ausgestaltung werden die Enden der Buchse mittels Vorbiegestücken vorgebogen. Die Vorbiegestücke stellen Bestandteile der Biegematrize dar. Neben den Vorbiegestücken weist die Biegematrize noch eine Basis auf. Meistens sind zwei Vorbiegestücke jeweils beidseitig der Basis vorgesehen. Außerdem lassen sich die beiden Vorbiegestücke vorteilhaft gegenüber der Basis der Biegematrize verfahren.

Im Verfahrensschritt a) befinden sich die Vorbiegestücke regelmäßig in ihrer höchsten Position gegenüber der Basis. Außerdem sind die Vorbiegestücke in dieser höchsten Position meistens gegenüber der Basis verriegelt. Dadurch kann der (Endlos-)Materialstreifen abgelängt und können gleichzeitig oder nachgeordnet die Enden der Buchse vorgebogen werden. Denn hierzu ist es lediglich erforderlich, dass der Niederhalter mit einer Vorbiegekontur gegen den Buchsenstreifen fährt und durch das Zusammenspiel der Vorbiegekontur am Niederhalter mit den beiden Vorbiegestücken der Biegematrize die Enden des Buchsenstreifens vorbiegt.

Mit Abschluss des Verfahrensschrittes a) und nach dem Vorbiegen der Buchse werden die beiden Vorbiegestücke in ihre zurückgezogene Position überführt. Zuvor mag die Verriegelung der Vorbiegestücke gegenüber der Basis gelöst worden sein. Jedenfalls sind jetzt durch die in der zurückgezogenen Position befindlichen Vorbiegestücke die jeweils vorgebogenen Enden der Buchse frei und können im Verfahrensschritt b) weitergebogen werden. Zu diesem Zweck taucht die vorgebogene Buchse im Verfahrensschritt b) bei zurückgezogenen Vorbiegestücken zusammen mit dem Kernstück in die Weiterbiegekontur des Niederhalters ein. D.h., der Niederhalter verfügt nicht nur über die Vorbiegekontur bzw. zwei Vorbiegekonturen, sondern auch über die Weiterbiegekontur für das Weiterbiegen.

Im Regelfall sind die beiden den jeweiligen Vorbiegestücken der Biegematrize zugeordneten Vorbiegekonturen des Niederhalters beidseitig der Weiterbiegekontur angeordnet und schließen jeweils an diese an. Die Weiterbiegekontur findet sich meistens zentral des Niederhalters. Außerdem ist die Weiterbiegekontur an das Kernstück angepasst. Denn im Verfahrensschritt b) und bei den zurückgezogenen Vorbiegestücken taucht die vorgebogene Buchse zusammen mit dem Kernstück in die zentrale Weiterbiegekontur des Niederhalters ein. Da die vorgebogenen Enden der Buchse frei seien, korrespondiert dieser Vorgang insgesamt dazu, dass die Buchse um das Kernstück herum weitergebogen wird. Am Ende des Verfahrensschrittes b) formt die Buchse meistens im Querschnitt einen nach unten hin offenen Kreis, weil das Kernstück im Regelfall zylindrisch ausgelegt ist. Außerdem ist die Weiterbiegekontur der Zylinderform des Kernstückes folgend hohlzylindrisch ausgebildet, formt meistens einen hohlen Halbzylinder.

Um nun die solchermaßen im Verfahrensschritt b) weitergebogene Buchse letztendlich endzubiegen, wird die weitergebogene Buchse vorteilhaft im Verfahrensschritt c) zusammen mit dem Kernstück mit Hilfe des Niederhalters auf die demgegenüber ortsfeste Biegematrize zu bewegt. Tatsächlich wird die weitergebogene Buchse im Verfahrensschritt c) in einer Endbiegekontur der Biegematrize aufgenommen. D.h., die weitergebogene Buchse wird im Verfahrensschritt c) in der Endbiegekontur der Biegematrize endgebogen. Hierbei werden die voneinander beabstandeten Enden der Buchse aufeinander zubewegt. Bei diesem Vorgang wird zugleich der sich zwischen den beiden Enden einstellende Längsschlitz auf eine vorgegebene Größe gebracht.

Zur Einstellung des Längsschlitzes vorgegebener Größe im Verfahrensschritt c) fahren dazu die Enden der weitergebogenen Buchse jeweils gegen einen Anschlag. Zu diesem Zweck ist meistens in der Endbiegekontur ein Steg oder Keil vorgesehen. Die beiden Randflächen des Steges fungieren jeweils als Anschlag für ein zugehöriges Ende der weitergebogenen Buchse. Die Dicke des Steges gibt dabei letztendlich die Größe des verbleibenden Längsschlitzes bei diesem Vorgang vor. Dadurch kann der Längsschlitz eingestellt bzw. kalibriert werden.

Über die Größe des Längsschlitzes lässt sich beispielsweise vorgeben, wie stark das auf diese Weise hergestellte Gummilager in seinem Durchmesser verringert werden kann, um beispielsweise in einer zugehörigen Buchsenaufnahme gehalten bzw. hierin eingepresst werden zu können. Dadurch lässt sich das Gummilager beispielsweise mit einer gewünschten Vorspannung ausrüsten.

Nach weiterer vorteilhafter Ausgestaltung kann das Kernstück seinen Durchmesser verändern. Auf diese Weise lassen sich insbesondere profilierte vorgebogene Buchsen weiterbiegen und endbiegen.

Tatsächlich setzt sich zu diesem Zweck das Kernstück im Wesentlichen aus einem Gliederband und einer Spreizeinheit für das Gliederband zusammen. D.h., das Gliederband kann hinsichtlich seiner Länge mit Hilfe der Spreizeinheit verändert werden. Resultierend hieraus verändert sich auch der Durchmesser des Kernstückes bzw. des Gliederbandes. Dabei ist die Auslegung meistens so getroffen, dass das Gliederband während des Biegevorganges (weiter- und endbiegen) einen Arbeitsdurchmesser einnimmt. Nach Beendigung des Biegevorganges und zum Auswerfen der endgebogenen Buchse beschreibt das Kernstück einen gegenüber dem Arbeitsdurchmesser kleineren Ausgangsdurchmesser. Dadurch kann die profilierte und endgebogene Buchse problemlos von dem Kernstück ausgestoßen bzw. ausgeworfen werden.

Dabei ist die Auslegung meistens so getroffen, dass der Arbeitsdurchmesser der Profilierung der endgebogenen Buchse entspricht, wohingegen der Ausgangsdurchmesser der endgebogenen Buchse den nicht profilierten Bereichen von seinem Durchmesser her entspricht.

Im Ergebnis werden ein Verfahren und eine Vorrichtung zur Herstellung einer Lagerbuchse beschrieben, die eine besonders kostengünstige und schnelle Fertigung ermöglichen. Tatsächlich arbeitet die Erfindung insgesamt mit einer ortsfesten Biegematrize bzw. ortsfesten Auslegung der Basis der Biegematrize. Lediglich die beiden Vorbiegestücke beidseitig der Basis und auch der Niederhalter sowie das Kernstück sind beweglich gestaltet. Dadurch lässt sich die Anzahl der Stelleinheiten reduzieren bzw. kann die Verstellung der bewegbaren Elemente (Vorbiegestücke, Niederhalter und Kernstück) von einer (einzigen) Vorrichtungs- bzw. Maschinenseite aus erfolgen. Das reduziert den konstruktionstechnischen Aufwand und erleichtert zugleich einen etwaigen Werkzeugtausch.

Die gesamte Vorrichtung bzw. das Verfahren lässt sich mit Hilfe einer optischen Einrichtung, beispielsweise einer Kamera, überwachen. Die entsprechenden Bilder können in diesem Zusammenhang auch an eine örtlich entfernte Stelle per Fernüberwachung übertragen werden. Dadurch ist es zugleich möglich, eine Bedienperson per Fernüberwachung zu schulen und auch hinsichtlich der ausgeführten Arbeiten zu kontrollieren. Dazu mag die betreffende Bedienperson mit einer überwachenden Person über beispielsweise ein Headset kommunizieren und können über die optische Einrichtung bzw. die Kamera die durchgeführten Arbeiten beispielsweise beim Werkzeugwechsel überwacht werden. Auch entsprechende Schulungen sind auf diese Weise möglich.

Das alles gelingt unter Berücksichtigung reduzierter Fertigungskosten und einer erhöhten Produktionsgeschwindigkeit. Hierin sind die wesentlichen Vorteile zu sehen.

Im Folgenden wird die Erfindung anhand einer lediglich ein Beispiel darstellenden Zeichnung näher erläutert; es zeigen:
- Fig. 1 bis 4: das erfindungsgemäße Verfahren in aufeinander folgenden Sequenzen,
- Fig. 5: die zugehörige Vorrichtung perspektivisch,
- Fig. 6: das Kernstück in einer Modifikation mit eingestelltem Arbeitsdurchmesser,
- Fig. 7: das Kernstück nach der Fig. 6 mit demgegenüber kleinerem Ausgangsdurchmesser,
- Fig. 8: verschiedene, nach dem erfindungsgemäßen Verfahren hergestellte Lagerbuchsen und
- Fig. 9A und 9B: eine alternative Ausführungsform der Vorrichtung gemäß Fig. 1.

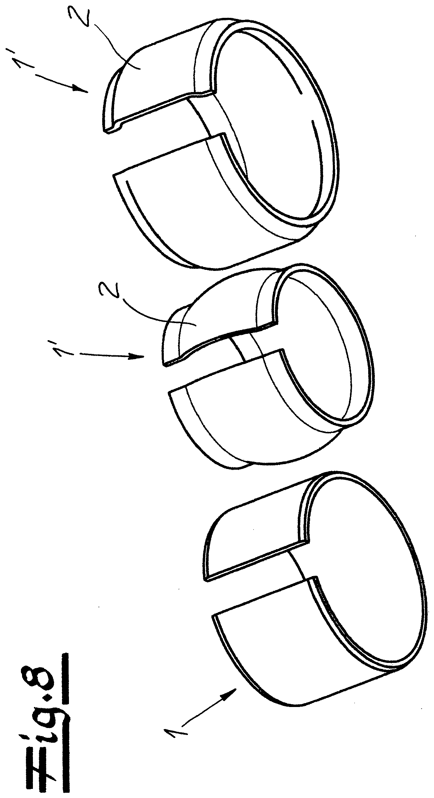

In den Figuren ist ein Verfahren zur Herstellung einer Lagerbuchse 1 bzw. 1' dargestellt. Anhand der Fig. 8 erkennt man, dass sowohl nicht profilierte, größtenteils zylindrische Lagerbuchsen 1 als auch Lagerbuchsen 1' mit einer Profilierung 2 realisiert werden können. Bei der Profilierung 2 handelt es sich im Ausführungsbeispiel der Fig. 8 um eine tonnenförmige oder stufenartige radiale Auswölbung, was selbstverständlich nur beispielhaft zu verstehen ist.

Die in der Fig. 8 dargestellte Lagerbuchse 1 bzw. 1' dient vorliegend zur Realisierung eines Gummilagers. Dazu mag die Lagerbuchse 1,1' innenseitig mit einer Beschichtung ausgerüstet werden und lässt sich anschließend ein Gummikörper anvulkanisieren, wie dies einleitend bereits beschrieben wurde, allerdings im Detail nicht dargestellt ist. Das solchermaßen realisierte Gummilager kann beispielsweise als Lenkerlager zur Lagerung einer Raumlenkerachse bei einem PKW Verwendung finden.

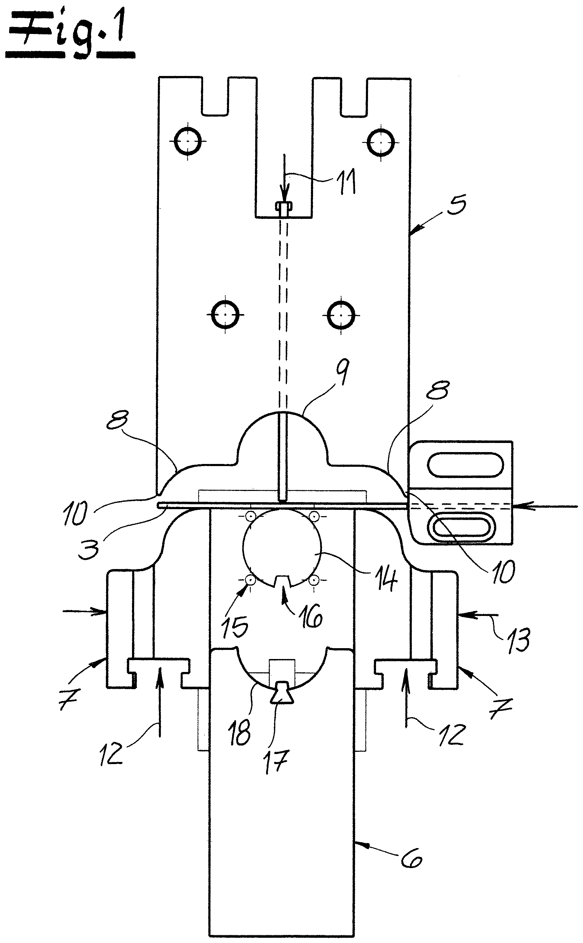

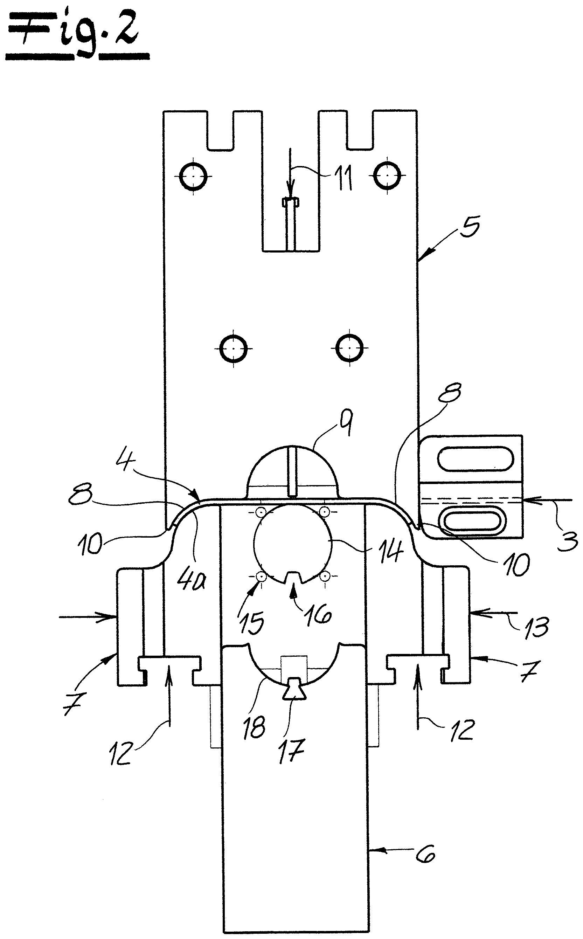

Zur Herstellung der Lagerbuchse 1 bzw. 1' wird wie folgt vorgegangen. Entsprechend der Fig. 1 wird der dort dargestellten Vorrichtung zunächst einmal ein in der Fig. 1 angedeuteter Materialstreifen bzw. Endlosmaterialstreifen 3 zugeführt. Bei dem Endlosmaterialstreifen 3 handelt es sich im Ausführungsbeispiel um einen Metallstreifen. Der Endlosmaterialstreifen 3 wird abgelängt und an seinen Enden zu einer Buchse 4 vorgebogen, wie dies beim Übergang von der Fig. 1 zur Fig. 2 deutlich wird.

Dazu verfügt die dargestellte Vorrichtung zunächst einmal über einen Niederhalter 5 und eine Biegematrize 6, 7. Der Niederhalter 5 ist mit zwei Vorbiegekonturen 8 an seinem dem Endlosmaterialstreifen 3 zugewandten Ende ausgerüstet. Die beiden Vorbiegekonturen 8 finden sich beidseitig einer zentral angeordneten Weiterbiegekontur 9. Die beiden Vorbiegekonturen 8 sind jeweils im Querschnitt viertelkreisbogenförmig ausgelegt. Demgegenüber verfügt die Weiterbiegekontur 9 über eine halbkreisförmige Gestalt. Jeweils außenrandseitig der beiden Vorbiegekonturen 8 sind Schneidkanten 10 vorgesehen, mit deren Hilfe der Endlosmaterialstreifen 3 abgelängt wird und die jeweiligen Buchsenstreifen gewünschter Länge zur Verfügung gestellt werden.

Die Biegematrize 6, 7 setzt sich aus einer zentral angeordneten Basis 6 und zwei beidseitigen Vorbiegestücken 7 zusammen. Die beiden Vorbiegestücke 7 sind gegenüber der Basis 6 der Biegematrizen 6, 7 verfahrbar ausgebildet. Die Basis 6 der Biegematrize 6, 7 ist insgesamt ortsfest ausgelegt. Die beiden Vorbiegestücke 7 korrespondieren zu den beiden Vorbiegekonturen 8 und wechselwirken mit diesen.

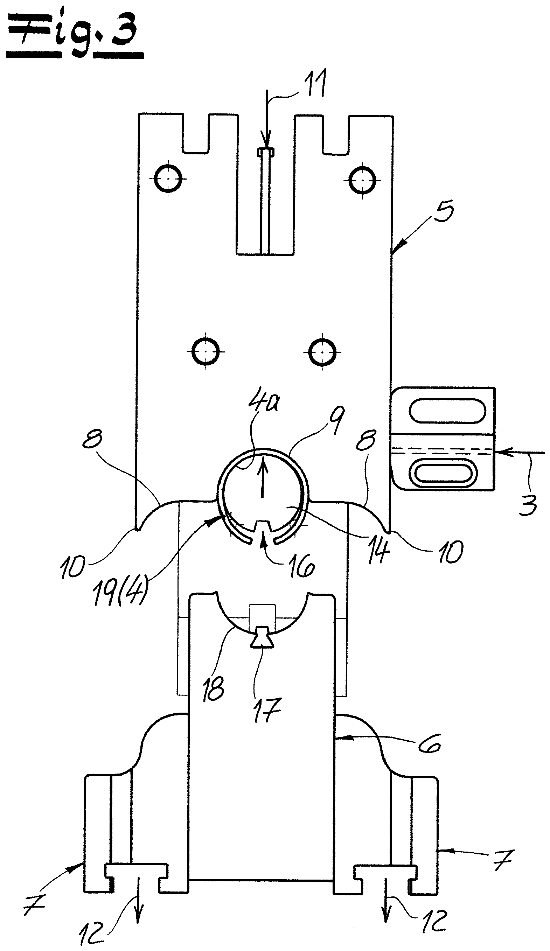

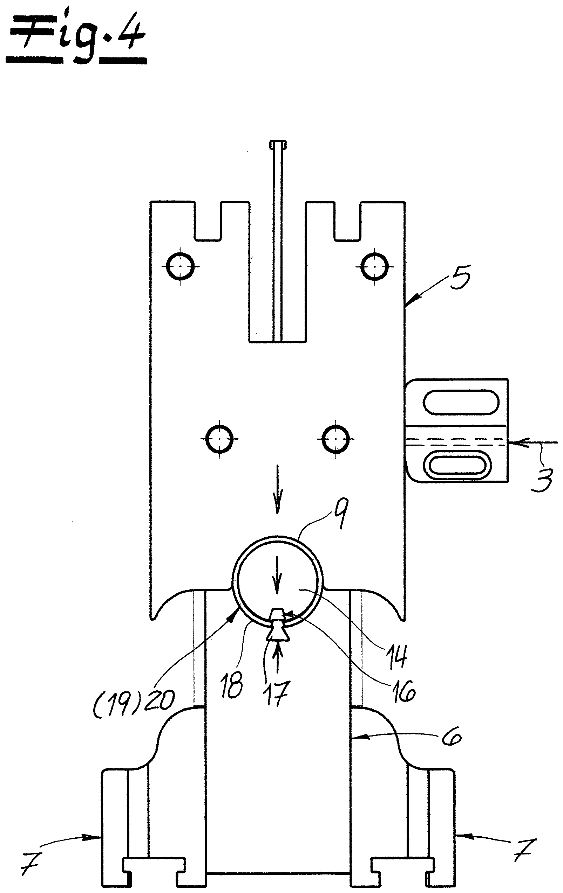

Gegenüber der ortsfesten Basis 6 der Biegematrize 6, 7 lässt sich der Niederhalter 5 verfahren. Dazu ist ein Stellantrieb 11 vorgesehen. Auch die beiden Vorbiegestücke 7 lassen sich gegenüber der demgegenüber mittig angeordneten Basis 6 verfahren. Hierfür sorgt ein weiterer Stellantrieb 12. Darüber hinaus ist noch eine Verriegelung 13 angedeutet, mit deren Hilfe die beiden Vorbiegestücke 7 in ihrer höchsten Position entsprechend der Darstellung in den Fig. 1 und 2 verriegelt werden können. Demgegenüber korrespondiert die Stellung der Vorbiegestücke 7 in den Fig. 3 und 4 zur zurückgezogenen Position der Vorbiegestücke 7.

Um die Vorbiegestücke 7 von ihrer höchsten Position in den Fig. 1 und 2 in die zurückgezogene Position nach den Fig. 3 und 4 überführen zu können, muss zuvor die Verriegelung 13 gelöst werden. Schließlich erkennt man in den Figuren noch ein Kernstück 14 sowie zugehörige Auswerfer 15, die zum grundsätzlichen Aufbau gehören. Im Rahmen des Ausführungsbeispiels nach den Fig. 1 bis 5 ist das Kernstück 14 zylindrisch aufgebaut und weist lediglich einen Eintauchspalt 16 an seiner Unterseite für einen Steg bzw. Keil 17 auf. Dieser Steg bzw. Keil 17 findet sich in einer Endbiegekontur 18 in der Biegematrize 6, 7 bzw. der Basis 6. Die Endbiegekontur 18 ist im Querschnitt - vergleichbar wie die Weiterbiegekontur 9 - halbkreisförmig ausgelegt. Außerdem sind die Weiterbiegekontur 9 und die Endbiegekontur 18 von ihrer Größe und Gestaltung her jeweils an das Kernstück 14 angepasst.

Der Biegevorgang wird nun wie folgt durchgeführt. Wie bereits mit Bezug zur Fig. 1 erläutert, wird zunächst der Endlosmaterialstreifen 3 abgelängt und zugleich an seinen beiden Enden zu der Buchse 4 vorgebogen. Zu diesem Zweck fährt der Endlosmaterialstreifen 3 unter den Niederhalter 5 und liegt auf dem Kernstück 14 bzw. den beiden in ihrer höchsten Position befindlichen Vorbiegestücken 7 auf. Sobald der Niederhalter 5 beim Übergang von der Fig. 1 zur Fig. 2 mit Hilfe des Stellantriebes 11 abgesenkt wird, sorgen zunächst die beiden Schneidkanten 10 dafür, dass aus dem Endlosmaterialstreifen 3 der Buchsenstreifen gewünschter Länge entsteht. Beim weiteren Niederfahren des Niederhalters 5 werden die Enden der Buchse 4 vorgebogen, weil die Enden zwischen einerseits den beiden Vorbiegekonturen 8 des Niederhalters 5 und andererseits den beiden Vorbiegestücken 7 der Biegematrize 6, 7 festgeklemmt und plastisch verformt werden. Die Vorbiegestücke 7 befinden sich bei diesem Vorgang entsprechend der Verfahrensabfolge in den Fig. 1 und 2 in ihrer höchsten Position und die Verriegelung 13 ist aktiv bzw. sorgt dafür, dass die beiden Vorbiegestücke 7 entsprechende Gegenkräfte im Vergleich zum demgegenüber niederfahrenden Niederhalter 5 aufbauen können.

Im Anschluss an diesen Verfahrensschritt a) und die Herstellung der vorgebogenen Buchse 4 in der Fig. 2 wird die Verriegelung 13 geöffnet. Als Folge hiervon werden die beiden Vorbiegestücke 7 in ihre zurückgezogene Position überführt, wie sie in den Fig. 3 und 4 dargestellt ist. Die vorgebogene Buchse 4 wird nun im Verfahrensschritt b) mit Hilfe des an einer Biegeseite 4a anliegenden Kernstückes 14 in der Weiterbiegekontur 9 des Niederhalters 5 um das Kernstück 14 herum weitergebogen. Die Biegeseite 4a der vorgebogenen Buchse 4 korrespondiert zu der Oberflächenseite der vorgebogenen Buchse 4, zu welcher die Enden im Verfahrensschritt a) vorgebogen worden sind.

Die vorgebogene Buchse 4 taucht im Verfahrensschritt b) und bei zurückgezogenen Vorbiegestücken 7 entsprechend der Darstellung in der Fig. 3 zusammen mit dem Kernstück 14 in die Weiterbiegekontur 9 des Niederhalters 5 ein. Hierdurch wird die vorgebogene Buchse 4 um das Kernstück 14 herum weitergebogen, weil die Enden frei sind und dem Zusammenspiel von einerseits dem Kernstück 14 und andererseits der zugehörigen und korrespondierenden Weiterbiegekontur 9 folgen können.

Bei diesem Vorgang bzw. im Verfahrensschritt b) bleibt der Niederhalter 5 in Ruhe und wird demgegenüber das Kernstück 14 in Richtung auf den Niederhalter 5 verfahren. Das ist selbstverständlich nicht zwingend, weil alternativ oder zusätzlich auch der Niederhalter 5 verstellt werden kann. Da das Kernstück 14 an der Biegeseite 4a der vorgebogenen Buchse 4 anliegt, sorgt dieser Vorgang dafür, dass durch das Eintauchen des Kernstückes 14 in die Weiterbiegekontur 9 zugleich die vorgebogene Buchse 4 um das Kernstück 14 herum weitergebogen wird. Am Ende des Verfahrensschrittes b) ist die in der Fig. 3 dargestellte Situation erreicht, in welcher die weitergebogene Buchse 19 mit ihren voneinander beabstandeten Enden zu erkennen ist.

Um nun die im Verfahrensschritt b) weitergebogene Buchse 19 in den endgebogenen Zustand zu überführen, fährt die weitergebogene Buchse 19 zusammen mit dem Kernstück 14 in Richtung auf die Biegematrize 6, 7. Dieser in der Fig. 4 dargestellte Vorgang korrespondiert dazu, dass der Niederhalter 5 zusammen mit dem Kernstück 14 in Richtung auf die ortsfeste Biegematrize 6, 7 bzw. die Basis 6 zubewegt wird. Zum Ende diese Vorganges tauchen die Enden der weitergebogenen Buchse 19 in die Endbiegekontur 18 der Biegematrize 6, 7 bzw. der Basis 6 ein. Indem der Niederhalter 5 letztendlich die Basis 6 der Biegematrize 6, 7 erreicht, werden die beiden beabstandeten Enden der weitergebogenen Buchse 19 aufeinander zu bewegt.

Im Verfahrensschritt c) wird folglich die weitergebogene Buchse 19 zusammen mit dem Kernstück 14 in der Biegematrize 6, 7 bzw. der dortigen Endbiegekontur 18 unter Einstellung eines Längsschlitzes vorgegebener Größe endgebogen. Für die Einstellung des Längsschlitzes sorgt der Steg bzw. Keil 17 am Grund der Endbiegekontur 18. Dabei taucht der Steg bzw. Keil 17 in den Eintauchspalt 16 im Kernstück 14 ein. Zugleich legen sich die beiden Enden der weitergebogenen Buchse 19 beidseitig an den Steg 17 respektive die dortigen Anschläge an.

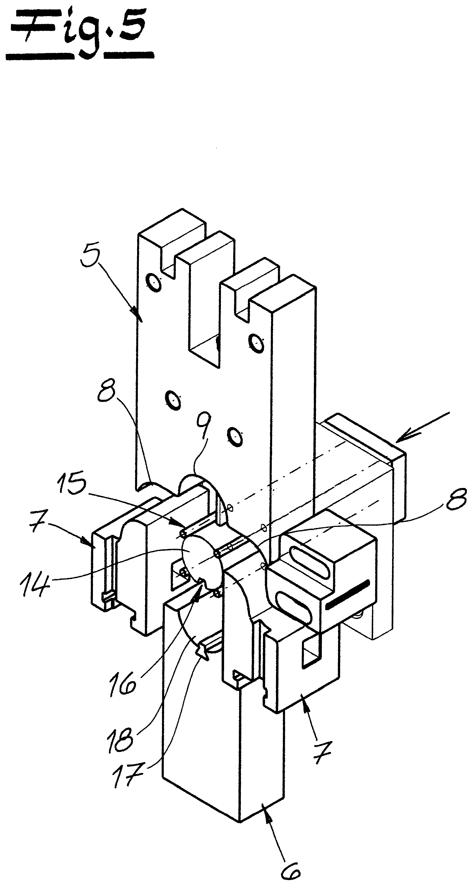

Der Verfahrensschritt c) ist beendet, wenn die Funktionsstellung gemäß der Fig. 4 erreicht ist, in welcher die endgebogene Buchse 20 dargestellt ist. Diese endgebogene Buchse 20 kann dann noch abschließend mit Hilfe der insbesondere in der Fig. 5 zu erkennenden Auswerfer 15 vom Kernstück 14 abgestreift werden. Das setzt allerdings voraus, dass der Niederhalter 5 vorher gegenüber der Biegematrize 6, 7 geliftet wird. Die solchermaßen hergestellte Lagerbuchse 1 ist links in der Fig. 8 dargestellt.

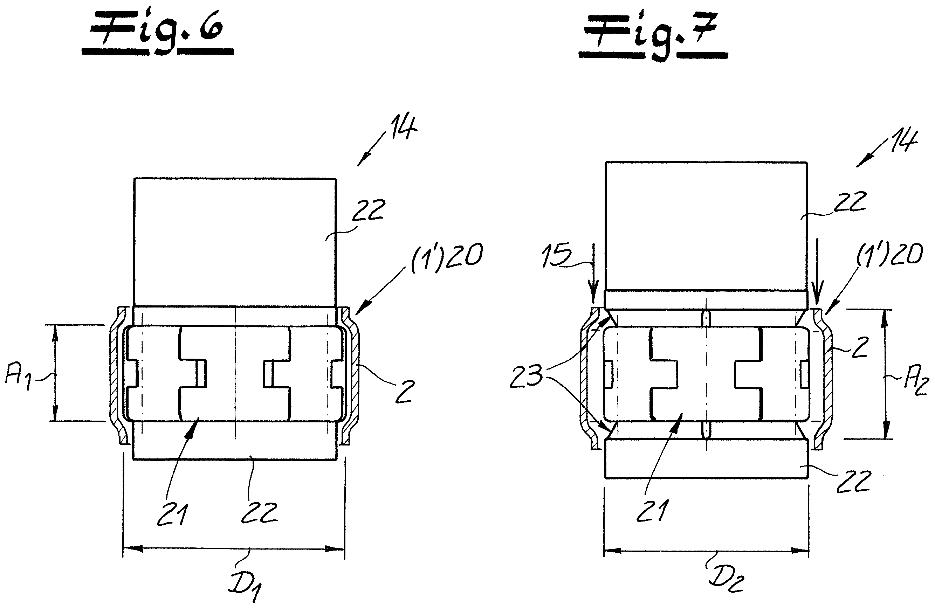

Soll nun eine Lagerbuchse des Typs 1' mit der Profilierung 2 entsprechend den beiden rechten Darstellungen in der Fig. 8 realisiert und umgesetzt werden, so greift die Erfindung auf ein modifiziertes Kernstück 14 nach den Darstellungen in den Fig. 6 und 7 zurück. Tatsächlich ist das dort dargestellte Kernstück 14 in der Lage, seinen Durchmesser D zu verändern, wie dies beim Vergleich der Fig. 6 und 7 deutlich wird. Um diese Durchmesserveränderung des Kernstückes 14 im Detail umzusetzen und folglich mit Hilfe des Kernstückes 14 profilierte vorgebogene Buchsen 4 weiter- und endbiegen zu können, setzt sich das modifizierte Kernstück 14 im Rahmen des Ausführungsbeispiels nach den Fig. 6 und 7 aus einem Gliederband 21 und einer Spreizeinheit 22 für das Gliederband 21 zusammen.

Die Spreizeinheit 22 verfügt über zwei voneinander beabstandete Stellglieder 22 mit jeweils einander zugewandter Schrägfläche 23. Das Gliederband 21 liegt randseitig auf den beiden Schrägflächen 23 auf und wird zwischen den beiden Schrägflächen 23 gehalten. Die Stellglieder 22 können hinsichtlich ihres Abstandes A verändert werden. Wenn die beiden Stellglieder 22 ihren minimalen und in der Fig. 6 dargestellten Abstand A₁ aufweisen, so korrespondiert dies dazu, dass das Gliederband 21 seine höchste Position im Vergleich zu den jeweiligen Schrägen 23 einnimmt und folglich einen Arbeitsdurchmesser D₁ aufweist, welcher der Auswölbung bzw. Profilierung 2 gemäß der Fig. 8 entspricht bzw. diese vorgibt. Nehmen dagegen die beiden Stellglieder 22 ihren maximalen Abstand A₂ gemäß der Darstellung in der Fig. 7 ein, so weist das Gliederband 21 seinen minimalen Durchmesser D₂ auf, welcher zum Ausgangsdurchmesser D₂ des Gliederbandes 21 korrespondiert.

In der Position nach der Fig. 7 kann folglich die dort angedeutete endgebogene Buchse 20 mit der Profilierung 2 mit Hilfe der Auswerfer 15 ähnlich wie zuvor vom Kernstück 14 abgestreift werden. Ansonsten arbeitet das Kernstück 14 nach den Fig. 6 und 7 wie zuvor beschrieben.

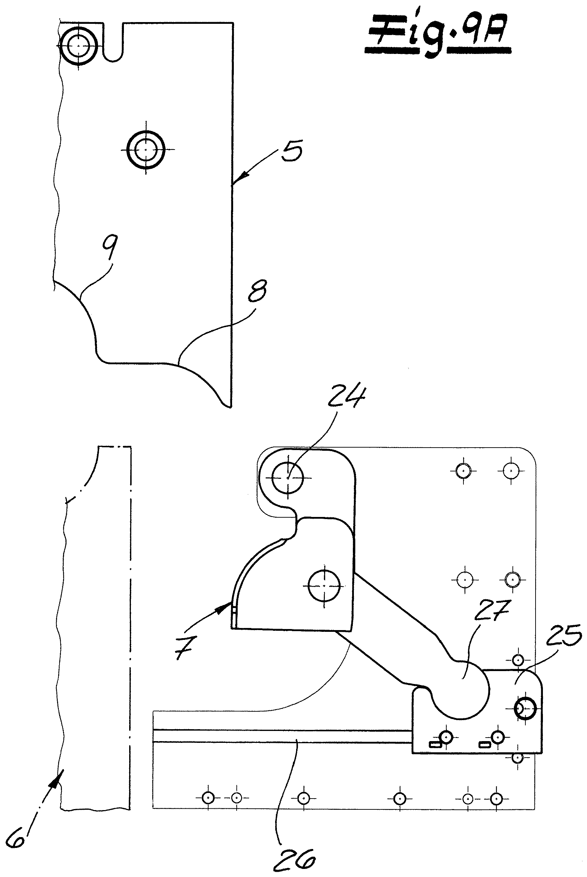

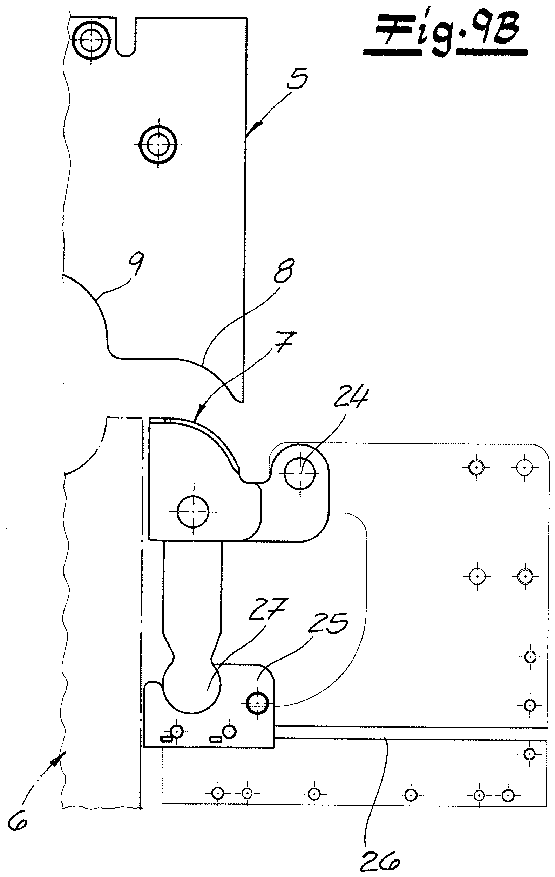

In den Fig. 9A und 9B ist eine alternative Ausführungsform der Vorrichtung gemäß der Fig. 1 dargestellt. Man erkennt erneut den Niederhalter 5 mit der Vorbiegekontur 8 und der Weiterbiegekontur 9. Dabei ist in den Fig. 9A und 9B lediglich der rechte Teil der fraglichen Vorrichtung dargestellt. Neben dem Niederhalter 5 ist die Vorrichtung erneut mit einer Biegematrize 6, 7 ausgerüstet.

Im Ausführungsbeispiel nach den Fig. 9A und 9B setzt sich die Biegematrize 6, 7 wiederum aus der zentral angeordneten Basis 6 und zwei beidseitigen Vorbiegestücken 7 zusammen, von denen - wie gesagt - lediglich das rechte Vorbiegestück 7 dargestellt ist. Die beiden Vorbiegestücke 7 bzw. das gezeigte Vorbiegestück 7 ist gegenüber der Basis 6 der Biegematrize 6, 7 verfahrbar ausgebildet, im Ausführungsbeispiel schwenkbar. Demgegenüber ist die Basis 6 der Biegematrize 6, 7 insgesamt ortsfest ausgelegt.

Die Fig. 9A zeigt die Freigabestellung der Biegematrize 6, 7. In dieser Freigabestellung ist das betreffende Vorbiegestück 7 um seine Achse 24 gegenüber dem Niederhalter 5 verschwenkt, so dass in dieser Position die fertig gebogene Buchse 4 bzw. die endgebogene Buchse 20 aus der Vorrichtung entfernt werden kann bzw. in der Regel schwerkraftunterstützt herausfällt. Die Freigabestellung nach der Fig. 9A schließt sich dabei an den Funktionszustand gemäß der zuvor beschriebenen Fig. 4 an bzw. an den Verfahrensschritt c).

In der Fig. 9B ist nun die Arbeitsstellung dargestellt. In der Arbeitsstellung nach der Fig. 9B ist das Vorbiegestück 7 mit Überlapp in Richtung auf den Niederhalter 5 um die Achse 24 verschwenkt worden, so dass eine vergleichbare Position erreicht wird, wie sie die Fig. 1 darstellt. Ausgehend von der Arbeitsstellung in der Fig. 9B erfolgt nun die Herstellung der Lagerbuchse 1 bzw. 1', wie zuvor bereits beschrieben.

Die alternative Ausführungsform der Vorrichtung nach den Fig. 9A und 9B ist mit dem Vorteil verbunden, dass das Fertigungsverfahren auf speziellen Pressen zum Einsatz kommen kann und Sondermaschinen nicht mehr erforderlich sind. Zur Verschwenkung des jeweiligen Vorbiegestückes 7 dient im Rahmen dieser Variante ein Schlitten 25, welcher entlang einer Führung 26 linear verfahren wird. Da das Vorbiegestück 7 über ein Gelenk 27 an den Schlitten 25 angeschlossen ist, führen Linearbewegungen zur gewünschten Schwenkbewegung des Vorbiegestückes 7 um die Achse 24.

## Patentansprüche

1. Verfahren zur Herstellung einer Lagerbuchse im Zuge der Realisierung eines Gummilagers, mit folgenden Verfahrensschritten:
a) ein Materialstreifen (3) wird abgelängt und an seinen Enden zu einer Buchse (4) vorgebogen;
b) die vorgebogene Buchse (4) taucht bei zurückgezogenen Vorbiegestücken (7) zusammen mit einem Kernstück (14) in eine Weiterbiegekontur (9) eines Niederhalters (5) ein und wird dazu mittels des an einer Biegeseite (4a) anliegenden Kernstückes (14) in der Weiterbiegekontur (9) des Niederhalters (5) um das Kernstück (14) herum weitergebogen;
c) die weitergebogene Buchse (19) wird zusammen mit dem Kernstück (14) in einer Biegematrize (6, 7) unter Einstellung eines Längsschlitzes vorgegebener Größe endgebogen.

2. Verfahren nach Anspruch 1, **dadurch gekennzeichnet, dass** der Materialstreifen (3) im Verfahrensschritt a) zugleich abgelängt und an seinen Enden zu der Buchse (4) vorgebogen wird.

3. Verfahren nach Anspruch 1 oder 2, **dadurch gekennzeichnet, dass** die Enden der Buchse (4) mittels Vorbiegestücken (7) als Bestandteile der Biegematrize (6, 7) vorgebogen werden.

4. Verfahren nach Anspruch 3, **dadurch gekennzeichnet, dass** die Vorbiegestücke (7) gegenüber einer Basis (6) der Biegematrize (6, 7) verfahrbar ausgebildet sind.

5. Verfahren nach einem der Ansprüche 1 bis 4, **dadurch gekennzeichnet, dass** die weitergebogene Buchse (19) im Verfahrensschritt c) zusammen mit dem Kernstück (14) mit Hilfe des Niederhalters (5) auf die demgegenüber ortsfeste Biegematrize (6, 7) zubewegt wird.

6. Verfahren nach einem der Ansprüche 1 bis 5, **dadurch gekennzeichnet, dass** die weitergebogene Buchse (19) im Verfahrensschritt c) in einer Endbiegekontur (18) der Biegematrize (6, 7) endgebogen wird.

7. Verfahren nach einem der Ansprüche 1 bis 6, **dadurch gekennzeichnet, dass** zur Einstellung des Längsschlitzes vorgegebener Größe im Verfahrensschritt c) die Enden der weitergebogenen Buchse (19) jeweils gegen einen Anschlag fahren.

8. Verfahren nach einem der Ansprüche 1 bis 7, **dadurch gekennzeichnet, dass** das Kernstück (14) seinen Durchmesser (D) verändern kann, um insbesondere profilierte vorgebogene Buchsen (4) weiter- und endbiegen zu können.

9. Vorrichtung zur Herstellung einer Lagerbuchse sowie zur Durchführung des Verfahrens nach einem der Ansprüche 1 bis 8, mit einem Niederhalter (5), einem Kernstück (14), Biegematrize (6) und Vorbiegestücken (7), wobei
die Biegematrize (6) und die Vorbiegestücke (7) in Verbindung mit dem Niederhalter (5) zum Vorbiegen der Enden einer Buchse (4) eingerichtet sind, **gekennzeichnet dadurch, dass** die Vorrichtung konfiguriert ist, sodass dazu die vorgebogene Buchse (4) bei zurückgezogenen Vorbiegestücken (7) zusammen mit dem Kernstück (14) in eine Weiterbiegekontur (9) des Niederhalters (5) eintaucht, wobei dazu
die vorgebogene Buchse (4) mit Hilfe des an einer Biegeseite (4a) anliegenden Kernstückes (14) in der Weiterbiegekontur (9) des Niederhalters (5) um das Kernstück (14) herum weitergebogen wird, und wobei
die weitergebogene Buchse (19) zusammen mit dem Kernstück (14) in der Biegematrize (6, 7) unter Einstellung eines Längsschlitzes vorgegebener Größe endgebogen wird.

## Claims

1. A method for manufacturing a bearing bushing in the course of the realization of a rubber bearing, comprising the following steps:
a) a material strip (3) is cut to length and pre-bent into a bushing (4) on its ends;
b) the pre-bent bushing (4) penetrates into an additional bending contour (9) of a holding-down device (5) together with a core element (14) while pre-bending elements (7) are retracted and is additionally bent around the core element (14) in the additional bending contour (9) of the holding-down device (5) by means of the core element (14) abutting on a bending side (4a);
c) the additionally bent bushing (19) is finish-bent together with the core element (14) in a bending die (6, 7) while a longitudinal slot of predefined size is adjusted.

2. The method according to claim 1, **characterized in that** the material strip (3) is in step a) simultaneously cut to length and pre-bent into the bushing (4) on its ends.

3. The method according to claim 1 or 2, **characterized in that** the ends of the bushing (4) are pre-bent by means of pre-bending elements (7) in the form of components of the bending die (6, 7).

4. The method according to claim 3, **characterized in that** the pre-bending elements (7) are designed so as to be displaceable relative to a base (6) of the bending die (6, 7).

5. The method according to one of claims 1-4, **characterized in that** the additionally bent bushing (19) is in step c) moved toward the bending die (6, 7), which is arranged stationary relative to the holding-down device (5), together with the core element (14) with the aid of the holding-down device.

6. The method according to one of claims 1-5, **characterized in that** the additionally bent bushing (19) is in step c) finish-bent in a finish bending contour (18) of the bending die (6, 7).

7. The method according to one of claims 1-6, **characterized in that** the ends of the additionally bent bushing (19) are in step c) respectively displaced against a stop in order to adjust the longitudinal slot of predefined size.

8. The method according to one of claims 1-7, **characterized in that** the core element (14) can change its diameter (D), particularly for additionally bending and finish-bending profiled pre-bent bushings (4) .

9. A device for manufacturing a bearing bushing, as well as for carrying out the method according to one of claims 1-8, comprising a holding-down device (5), a core element (14), a bending die (6) and pre-bending elements (7), wherein
the bending die (6) and the pre-bending elements (7) are designed for pre-bending the ends of a bushing (4) in conjunction with the holding-down device (5), **characterized in that** the device is configured such that
the pre-bent bushing (4) penetrates into an additional bending contour (9) of the holding-down device (5) together with the core element (14) while the pre-bending elements (7) are retracted, wherein
the pre-bent bushing (4) is additionally bent around the core element (14) in the additional bending contour (9) of the holding-down device (5) by means of the core element (14) abutting on a bending side (4a), and wherein
the additionally bent bushing (19) is finish-bent together with the core element (14) in the bending die (6, 7) while a longitudinal slot of predefined size is adjusted.

## Revendications

1. Procédé de fabrication d'une douille de palier au cours de la réalisation d'un palier en caoutchouc, comportant les étapes opératoires suivantes :
a) une bande de matériau (3) est sélectionnée et pré- cintrée à ses extrémités pour former une douille (4) ;
b) la douille pré-cintrée (4), une fois que les pièces de pré-cintrage sont retirées (7), plonge avec une pièce centrale (14) dans un contour de poursuite de cintrage (9) d'un serre-flan (5) et est pour ce faire cintrée davantage autour de la pièce centrale (14) au moyen d'une pièce centrale (14) reposant sur le côté cintrage (4a) dans le contour de poursuite de cintrage (9) du serre-flan (5) ;
c) la douille cintrée davantage (19) est soumise à un cintrage final avec la pièce centrale (14) dans une matrice de cintrage (6, 7) en réglant une fente longitudinale de taille prédéterminée.

2. Procédé selon la revendication 1, **caractérisé en ce que** la bande de matériau (3), dans l'étape opératoire a), est en même temps sectionnée est pré-cintrée à ses extrémités pour former la douille (4).

3. Procédé selon la revendication 1 ou 2, **caractérisé en ce que** les extrémités de la douille (4) sont pré-cintrées au moyen de pièces de pré-cintrage (7) faisant partie intégrante de la matrice de cintrage (6, 7) .

4. Procédé selon la revendication 3, **caractérisé en ce que** les pièces de pré-cintrage (7) sont réalisées de manière à être mobiles par rapport à une base (6) de la matrice de cintrage (6, 7).

5. Procédé selon une des revendications 1 à 4, **caractérisé en ce que** la douille cintrée davantage (19) est acheminée dans l'étape opératoire c) avec la pièce centrale (14) à l'aide du serre-flan (5) vers la matrice de cintrage comparativement fixe (6, 7).

6. Procédé selon une des revendications 1 à 5, **caractérisé en ce que** la douille cintrée davantage (19) est soumise à un cintrage final dans l'étape opératoire c) dans un contour de cintrage final (18) de la matrice de cintrage (6, 7).

7. Procédé selon une des revendications 1 à 6, **caractérisé en ce que**, pour régler la fente longitudinale de taille prédéterminée dans l'étape opératoire c), les extrémités de la douille cintrée davantage (19) se déplacent respectivement vers une butée.

8. Procédé selon une des revendications 1 à 7, **caractérisé en ce que** la pièce centrale (14) peut changer de diamètre (D) pour pouvoir assurer la poursuite du cintrage et le cintrage final de douilles pré-cintrées (4), en particulier profilées.

9. Dispositif de fabrication d'une douille de palier et de réalisation du procédé selon une des revendications 1 à 8, comportant un serre-flan (5), une pièce centrale (14), une matrice de cintrage (6) et des pièces de pré-cintrage (7),
la matrice de cintrage (6) et les pièces de pré-cintrage (7) étant conçues en liaison avec le serre-flan (5), pour pré-cintrer les extrémités d'une douille (4), **caractérisé en ce que** le dispositif est conçu pour que la douille pré-cintrée (4), une fois que les pièces de pré-cintrage (7) sont retirées, plonge avec la pièce centrale (14) dans un contour de poursuite de cintrage (9) du serre-flan (5), sachant que, à cet effet,
la douille pré-cintrée (4) est cintrée davantage à l'aide d'une pièce centrale (14) reposant sur un côté cintrage dans le contour de poursuite de cintrage (9) du serre-flan (5) autour de la pièce centrale (14), et que
la douille cintrée davantage (19) est soumise un cintrage final avec la pièce centrale (14) dans la matrice de cintrage (6, 7) en réglant une fente longitudinale de taille prédéfinie.
